# EUROPEAN PATENT APPLICATION

(11) **EP 1 387 501 A1**
(43) Date of publication of application: **04.02.2004**
(21) Application number: 02016961.1
(22) Date of filing: 01.08.2002
(51) Int. Cl.: H04B 7/04, H04B 7/06, H04B 7/08

(54) **Transmitting and receiving device for a MIMO wireless communication system with adaptive antenna processing**

(71) Applicant: Sony International (Europe) GmbH, 10785 Berlin (DE)
(72) Inventor: Stirling-Gallacher, Richard, Adv.Tech. Cter Stuttg, 70327 Stuttgart (DE); SUno, Masahiro, Adv. Tech. Cter Stuttgart, 70327 Stuttgart (DE); Amir-Alikhani, Hamid, Adv. Tech. Cter Stuttgart, 70327 Stuttgart (DE); Ratni, Mohamed, Adv. Tech. Cter Stuttgart, 70327 Stuttgart (DE); Krupezevic, Dragan, Adv. Tech. Cter Stuttgart, 70327 Stuttgart (DE)
(74) Representative: Körber, Martin, Dipl.-Phys.

(57) **Abstract**

The present invention relates to a transmitting device and a receiving device for a multiple-input multiple-output (MIMO) wireless communication system. The transmitting device 20 according to the present invention comprises a MIMO baseband processing means 21 for processing a first signal data stream 22 into a plurality of data streams, a plurality of antenna means 28a, ... 28n for respectively transmitting the plurality of data streams, and an adaptive antenna baseband processing means 29 for adaptively processing a second single data stream 30 into a data stream to be transmitted via one or more of said antenna means 28a, ... 28n. The transmitting device can either be operated in a MIMO mode or in an adaptive antenna mode. In the adaptive antenna mode, data transmission with a formed beam is possible.

## Description

The present invention relates to a transmitting device and receiving device for a multiple-input multiple-output (MIMO) wireless communication system.

MIMO wireless communication systems use a plurality of antennas in a transmitting device and a plurality of antennas in the receiving device in order to achieve improved communication capacities as compared to single antennas. MIMO systems are particularly useful when the spatial diversity is high, i.e. the channel correlation coefficient between the antennas is low, whereby high data rate communication can be obtained.

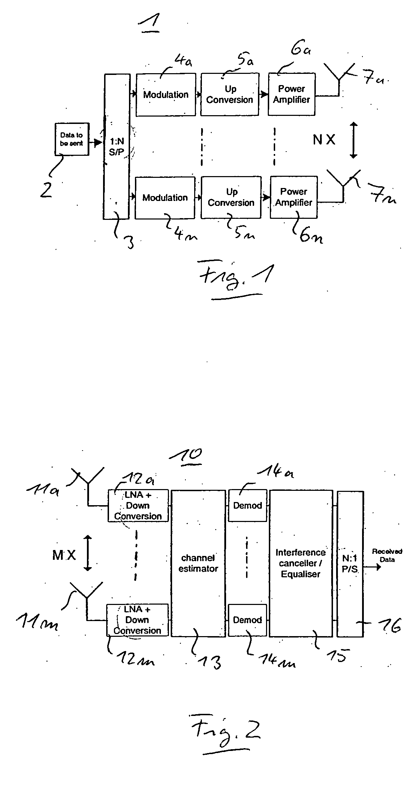

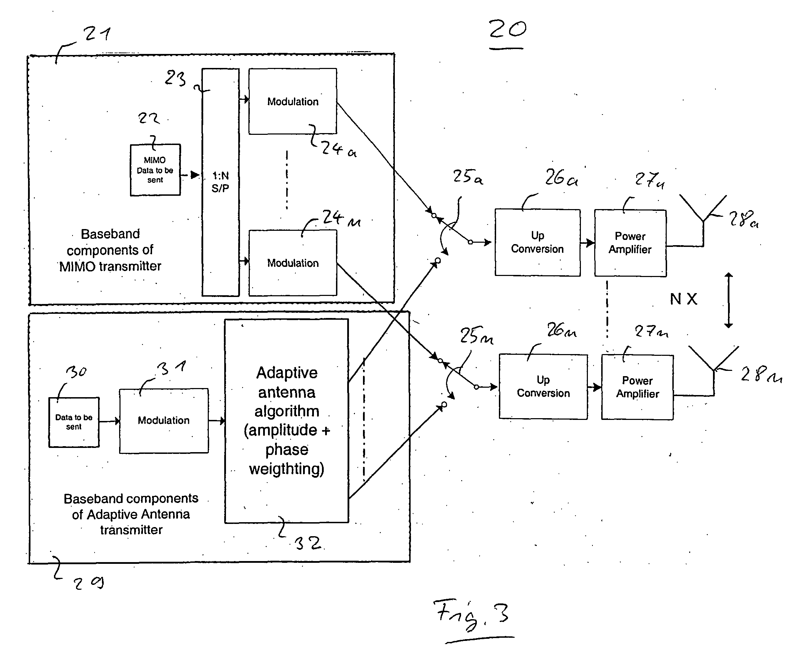

Fig. 1 shows a schematic block diagram of an example of a transmitting device for a MIMO wireless communication system and Fig. 2 shows an example of the receiving device of a MIMO wireless communication system. In the transmitting device 1 shown in Fig. 1, a single data stream 2 to be transmitted is serial to parallel converted in a serial/parallel converter 3 so that a plurality of data streams are obtained. In the example shown in Fig. 1, n (n is a natural number) data streams are obtained. Each of the data streams is separately modulated in a modulation means 4a, ... 4n, up-converted in an up-conversion means 5a, ... 5n and amplified in a power amplifier 6a, ... 6n. The modulated, up-converted and amplified data streams are then separately and individually transmitted via a plurality of antenna means 7a, ... 7n. Thus, in a MIMO system, a single data stream is split into several different parallel data streams, whereby each of the parallel data streams is transmitted via a single antenna means.

On the receiver side, a receiving device 10 as shown in Fig. 2 comprises a plurality of antenna means 11a, ... 11m (m is a natural number). Each antenna means 11a, ... 11m receives a single one of the parallel data streams transmitted by the transmitting device 1 as for example shown in Fig. 1. Thereafter, each of the received parallel data streams is down-converted in a respective down-conversion means 12a, ... 12m. A channel estimation is then performed for each of the parallel received and down-converted data streams in a channel estimater 13. Thereafter, each of the parallel received data streams is demodulated in a demodulation means 14a, ... 14m. After interference cancellation and equalisation in a corresponding interference canceller/equaliser 15, the parallel received data streams are parallel to serial converted in a parallel/serial converter 16, which combines the parallel received data streams into a single data stream to be further processed. It has to be understood that the transmitting device 1 shown in Fig. 1 and the receiving device 10 shown in Fig. 2 are merely examples showing some of the essential elements of the respective devices. In practice, a channel coding, interleaving or synchronisation will also be performed in the transmitting device and the up-conversion block could also include digital to analogue conversion and the down-converter block could also include analogue to digital conversion.

For a MIMO wireless communication system comprising a transmitting device 1 with n transmitter antennas n is a natural number greater than one and a receiving device 10 comprising m receiving antennas (m ≥n), the maximum data rate is n times to data rate of each subsystem. Also, the diversity could be increased because the receiver has m receiver antennas, so that the total number of channels is m x n.

An example of an adaptive MIMO wireless communication system is for example described in EP 1 207 645, in which the coding rate and/or the gain of the separate data streams transmitted on each antenna is individually controlled via a feedback loop from the receiver. A further adaptive MIMO wireless communication system is described in EP 1 185 001, in which the transmission mode is changed from a MIMO system with separate data streams for each of the antennas to a transmit diversity scheme using space time coding depending on the channel conditions. The adaptive MIMO wireless communication system described in EP 1 117 197 is a system in which the number of independently transmitted data streams and the gain of the individual streams are adjusted according to the channel conditions. Although these prior documents propose to adaptively change the coding rate, gain or number of data streams depending upon the channel conditions, none of the documents provides a possibility to alternatively perform a beam forming.

The object of the present invention is therefore to provide a transmitting device and a receiving device for a MIMO normal wireless communication system, which alternatively allow a beam forming.

The above object is achieved by a transmitting device for a MIMO normal wireless communication system according to claim 1, comprising a MIMO baseband processing means for processing a first single data stream into a plurality of data streams, a plurality of antenna means for respectively transmitting the plurality of data streams, and an adaptive antenna baseband processing means for adaptively processing a second single data stream into a data stream to be transmitted via one or more of said antenna means.

The above object is further achieved by a receiving device for a MIMO wireless communication system according to claim 5, comprising a plurality of antenna means for a respectively receiving a plurality of data streams, a MIMO baseband processing means for processing the plurality of data streams received via said antenna means into a single data stream, and an adaptive antenna baseband processing means for adaptively processing a single data stream received via one or more of said antenna means into a single data stream.

The transmitting device and the receiving device according to the present invention therefore enable to perform a beam forming alternatively to the operation in a MIMO system. Beam forming is particularly useful for increasing the communication range, increasing the signal to noise and signal to interference ratio of the wanted link, for providing a directivity, positioning and targeting functionality as well as for decreasing the interference to other users.

The transmitting device and the receiving device according to the present invention can therefore be operated either in a MIMO mode or in an adaptive beam forming mode, in which a single data stream is transmitted in a formed way by one or more of the antenna means.

Advantageously, the transmitting device comprises switching means for selectively connecting each of said antenna means to said MIMO baseband processing means or said adaptive antenna baseband processing means. Similarly, the receiving device advantageously comprises switching means for selectively connecting each of the antenna means to the MIMO baseband processing means or said adaptive antenna baseband processing means. Hereby, the switching between the MIMO mode and the adaptive beam forming mode can be easily and effectively performed.

Advantageously, the adaptive antenna baseband processing means of the transmitting device processes the data stream to be transmitted via said one or more antenna means individually so that an increased gain in a wanted direction is achieved. Further advantageously, the adaptive antenna baseband processing means of the transmitting device processes the data stream to be transmitted by weighting the phase and the amplitude of the data stream individually for each antenna means.

Hereby, the beam can be effectively formed since the weighting can be done so that the antennas have an increased gain in a wanted direction and a decreased gain in the unwanted direction. Not all of the antenna have to be used, but if all of the antennas are used a sharp beam with a high gain can be formed. In order to save battery power, however, only a few of the antennas can be used.

Correspondingly, the adaptive antenna baseband processing means of the receiving device processes the data streams received by the antennas and weighted in their phase and amplitude individually for each antenna means for the purpose of directivity so that a single data stream is obtained.

The present invention is explained in further detail in the following description in relation to the enclosed drawings, in which
Fig. 1 shows a schematic block diagram of a transmitting device according to the prior art,
Fig. 2 shows a schematic block diagram of a receiving device according to the prior art,
Fig. 3 shows a schematic block diagram of a transmitting device according to the present invention, and
Fig. 4 shows a schematic block diagram of a receiving device according to the present invention.

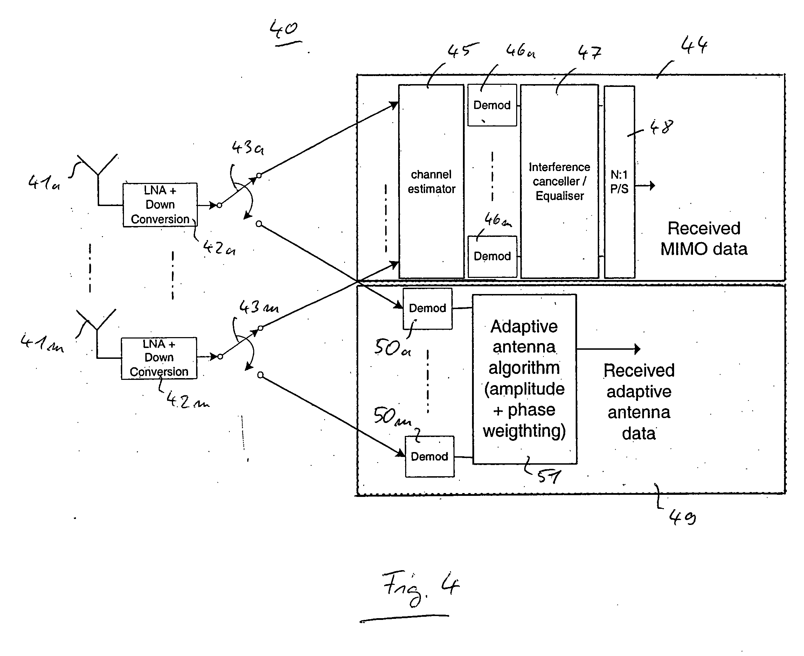

Fig. 3 shows a schematic block diagram of a transmitting device 20 for a MIMO wireless communication system according to the present invention. The wireless communication system may for example be a GSM or a UMTS or any other communication system, in which the present invention can be used.

The transmitting device 20 comprises essentially a MIMO baseband processing means 21 for processing a first single data stream 22 into a plurality of data streams.

The MIMO normal baseband processing means 21 comprises the essential baseband processing components, such as a serial to parallel converter 23 which converts the single data stream 22 into parallel data streams. Each of the parallel data streams output by the serial to parallel converter 23 is modulated in a respective modulation means 24a, ... 24n. In the example shown in Fig. 3, the serial to parallel converter 23 converts the single data stream 22 into n parallel data streams, n being a natural number. The modulated parallel data streams output by the modulation means 24a, ... 24n are respectively supplied to a switch means 25a, ... 25n and then respectively up-converted by an up-conversion means 26a, ... 26n and amplified by a power amplifier means 27a, ... 27n. Each of the parallel data streams output from the amplifier means 27a, ...27n is then transmitted via a respective antenna means 28a, ... 28n. These functional components therefore correspond to the functional elements of the transmitting device 1 shown in Fig. 1. The transmitting device 20 according to the present invention can operate in a MIMO mode if required, for example in order to obtain high data rates when the spatial diversity is high and the channel correlation coefficient between the antennas 28a,. ... 28n is low. If the transmitting device 20 according to the present invention is to be operated in the MIMO mode, the switch means 25a, ... 25n respectively connect the modulation means 24a, ... 24n to the respective up-conversion means 26a, ... 26n. In this MIMO normal mode, operation as in the prior art MIMO transmitting devices is possible.

Further, the transmitting device 20 according to the present invention comprises an adaptive antenna baseband processing means 29 for adaptively processing a second single data stream 30 into a data stream to be transmitted via one or more of said antenna means 28a, ... 28n. Hereby, the second single data stream 30 can be the same single data stream 22 transmitted in separated data streams in the MIMO mode or a different single data stream. The data stream 30 is supplied to modulation means 31 which modulates the data stream and supplies the modulated data stream to an adaptive antenna algorithm means 32. The adaptive antenna algorithm means performs a phase and amplitude weighting on the modulated data stream individually for each of the antenna means 28a, ... 28n so that a wanted beam is formed when the weighted data streams are transmitted from the antenna means 28a, ... 28n. Hereby, one or more or even all of the plurality of antenna means 28a, ... 28n can be used.

In the adaptive beam forming mode, the switch means 25a, ... 25n are switched so that they connect the adaptive antenna algorithm means 32 respectively to the up-conversion means 26a, ... 26n. Here, the weighted data streams are up-converted and then supplied to the amplifier means 27a, ... 27n, respectively, to be amplified and then transmitted via the antenna means 28a, ... 28n.

The transmitting device 20 according to the present invention therefore enables to transmit a single but differently or individually weighted data stream via one or more of the antenna means 28a, ... 28n. Hereby, the data streams supplied to the antenna means are individually phase and amplitude weighted in the adaptive antenna algorithm means 32 so that the antenna means 28a, ... 28n have an increased gain in the wanted direction and a decreased gain in the unwanted direction. Thereby, a beam is formed. In certain situations, it may be preferable not to use all the antennas or even only a single antenna means, for example in order to save battery power. By performing the beam forming in the adaptive beam forming mode, the transmission range can be increased, the signal to noise and/or signal to interference ratio of the wanted link is increased, the directivity, positioning and/or targeting functionality is provided and an interference to other users is decreased.

It has to be noted, that several of the baseband components of the MIMO baseband processing means 21 could also be used in the adaptive antenna baseband processing means 29, so that a further reduction of the number of elements in the transmitting device 20 can be achieved. Further, it has to be noted that the components shown and described for the MIMO baseband processing means 21 and the adaptive antenna baseband processing means 29 are only an example and can vary depending on the communication system. Also, not all of the elements necessary for a transmission of signals are described. It is also to be noted that the antenna means 28a, ... 28n in practice transmit signals carrying the data streams.

Fig. 4 shows a schematic block diagram of a receiving device 40 for a MIMO wireless communication system according to the present invention. The receiving device 40 is particularly suited to receive data streams or signals transmitted from the transmitting device 20 shown in Fig. 3. The receiving device 40 according to the present invention can operate in any suitable wireless communication system, such as the GSM, UMTS or any other available wireless communication system. The receiving device 40 hereby comprises essentially a plurality of antenna means 41a, ... 41m (m being a natural number) for respectively receiving a plurality of data streams, i.e. signals carrying the data streams, a MIMO baseband processing means 44 for processing the plurality of data streams received via the antenna means into a single data stream, and an adaptive antenna baseband processing means 49 for adaptively processing a single data stream received via one or more of the antenna means 41a, ... 41m into a single data stream. Hereby, the receiving device 40 can be operated in either a MIMO mode, in which the signals or data streams received by the antennas 41a, ... 41m are down-converted respectively in down-conversion means 42a, ... 42m and supplied via respective switch means 43a, ... 43m to the MIMO baseband processing means 44. Alternatively, the receiving device 40 can be operated in an adaptive beam forming mode in which the data stream or the signals received by one or more of the antenna means 41a, ... 41m is down-converted in the down-conversion means 42a, ... 42m and supplied via the respective switch means 43a, ... 43m to the adaptive antenna baseband processing means 49. Thus, the switch means 43a, ... 43m selectively connect the antenna means 41a, ... 41m to the MIMO baseband processing means 44 or the adaptive antenna baseband processing means 49. In the MIMO mode, the parallel and separate data streams are signals received by the antenna means 41a, ... 41m are down-converted respectively by the down-conversion means 42a, ... 42m and supplied via the switch means 43a, ... 43m to a channel estimator means 45 of the MIMO baseband processing means 44. Thereafter, the parallel data streams are supplied to respective demodulation means 46a, ... 46m for demodulation. In a succeeding interference canceller/equaliser means 47, interferences are cancelled and the signals are equalised, whereafter the parallel data streams are parallel to serially converted in a parallel/serial converter 48 into a single data stream to be further processed.

In the adaptive beam forming mode, the received data stream is supplied from the down-conversion means 42a, ... 42m via the switch means 43a, ... 43m to respective demodulation means 50a, ... 50m of the adaptive antenna baseband processing means 49. The demodulated data streams are then supplied to an adaptive antenna algorithm means 51, in which the phase and amplitude weighted data streams are weighted on the phase and amplitude and combined to a single data stream to be further processed.

It is to be noted, that several components used in the MIMO baseband processing means 44 can also be used in the adaptive antenna baseband processing means 49 and vice versa, so that a reduction of the number of components can be achieved. Also, the elements shown in the receiving device 40 of Fig. 4 are only examples and additional or alternative elements for processing the received signals can be used depending on the respective wireless communication system. For example in an OFDM receiving device, the channel estimation normally occurs after the demodulation. Also, the transmitting device 20 and the receiving device 40 can form one transceiver device. In this case, only one plurality of antenna means for transmitting and receiving the data streams need to be provided.

For the transmitting device 20 and the receiving device 40 of the present invention, the choice of modes to be used under which circumstances can depend on various criteria. For example, the adaptive beam forming mode can be used for directivity or targeting to set up a connection with a particular device, before a transmission at high data rates can take place in the MIMO mode (internal operating mode). Further, the multi-path channel might not be suitable for high data rate MIMO mode due to not enough scutters and it may be more suitable to use the adaptive beam forming mode in which the link margin to a particular device is improved and the interference to other devices is decreased (channel conditions). In another case, the devices may not be able to support the MIMO mode and the adaptive beam forming mode may be necessary to extend the physical range between the devices (range conditions). Also, at high system loads, the interference may be too high to use the high data rate MIMO mode and it may be more suitable to use the adaptive beam forming mode where the interference of each link could be reduced (interference conditions). A further case is the broadcast data transmission and reception. Here, broadcast data contains basic radio link information, i.e. network identification number, frame number, timing indicator, transmit power, etc. Further, the required data rate of the broadcast data is low and the signal should be transmitted to a wide direction. In this case only one transmission or reception antenna means with associated modulator and up-converter or down-converter are needed for the broadband data transmission and reception, so that a transmitting and receiving device in the adaptive beam forming mode can be used. Hereby, the power consumption of the transmitting device and the receiving device can be reduced.

## Claims

1. Transmitting device (20) for a multiple-input multiple-output (MIMO) wireless communication system, comprising
a MIMO baseband processing means (21) for processing a first single data stream (22) into a plurality of data streams,
a plurality of antenna means (28a, ... 28n) for respectively transmitting the plurality of data streams, and
an adaptive antenna baseband processing means (29) for adaptively processing a second single data stream (30) into a data stream to be transmitted via one or more of said antenna means (28a, ... 28n).

2. Transmitting device (20) for a MIMO wireless communication system according to claim 1,
**characterized by**
switching means (25a, ... 25n) for selectively connecting each of said antenna means (28a, ... 28n) to said MIMO baseband processing means (21) or said adaptive antenna baseband processing means (29).

3. Transmitting device (20) for a multiple-input multiple-output (MIMO) wireless communication system according to claim 1 or 2,
**characterized in,**
**that** said adaptive antenna baseband processing means (29) processes said data stream to be transmitted via said one or more antenna means (28a, ... 28n) individually so that an increased gain in a wanted direction is achieved.

4. Transmitting device (20) for a multiple-input multiple-output (MIMO) wireless communication system according to claim 3,
**characterized in,**
**that** said adaptive antenna baseband processing means (29) processes said data stream to be transmitted via said one or more antenna means (28a, ... 28n) by weighting the phase and the amplitude of the data stream individually for each antenna means.

5. Receiving device (40) for a multiple-input multiple-output (MIMO) wireless communication system, comprising
a plurality of antenna means (41a, ... 41m) for respectively receiving a plurality of data streams,
a MIMO baseband processing means (40) for processing the plurality of data streams received via said antenna means into a single data stream, and
an adaptive antenna baseband processing means (49) for adaptively processing a single data stream received via one or more of said antenna means (41a, ... 41m) into a single data stream.

6. Receiving device (40) for a MIMO wireless communication system according to claim 5,
**characterized by**
switching means (43a, ... 43m) for selectively connecting each of said antenna means (41a, ... 41m) to said MIMO baseband processing means (44) or said adaptive antenna baseband processing means (49).

7. Receiving device (40) for a multiple-input multiple-output (MIMO) wireless communication system according to claim 5 or 6,
**characterized in,**
**that** said adaptive antenna baseband processing means (49) processes data streams received by said antenna means and weighted in their phase and amplitude individually for each antenna means for the purpose of directivity in order to obtain a single data stream.
